# EUROPEAN PATENT SPECIFICATION

(11) **EP 1 021 955 B1**
(45) Date of publication and mention of the grant of the patent: **01.10.2003**
(21) Application number: 00200225.1
(22) Date of filing: 20.01.2000
(51) Int. Cl.: A21B 3/18

(54) **Device for removing bread from baking tins**
Vorrichtung zum Entfernen eines Brots aus einer Backform
Dispositif pour l'enlèvement d'un pain d'un moule de cuisson

(30) Priority: 20.01.1999 NL 1011094
(43) Date of publication of application: 26.07.2000
(73) Proprietor: Blom Food Equipment B.V., 2984 CB Ridderkerk (NL)
(72) Inventor: Vijverberg, Henricus Andreas Theodorus Robertus, 2691 RX 's-Gravenzande (NL)
(74) Representative: Eveleens Maarse, Pieter

(56) References cited:
- FR-A- 2 571 208
- NL-A- 6 904 226
- US-A- 4 273 496

## Description

The present invention relates to a device for removing baking products from baking tins, comprising engaging means mounted on a frame for engaging the baking products, wherein the frame is adapted to move at least vertically with the engaging means to remove the baking products from the baking tins wherein the engaging means comprise pins movable into the in a direction with a horizontal component wherein the device has been adapted to remove loaves of bread from baking tins; the pins are adapted to enter the loaves of bread on their short sides; and that the device comprises on each side at least two pins for each loaf of bread which are adapted to enter the two mutually opposite short sides of the loaf of bread above the upper pins of the baking tins.

Such devices are generally known. Besides US-A-4,130,314 discloses such an apparatus.

This prior art apparatus is adapted to lift small bakery products from baking tins. The aim of the invention is to provide such an apparatus which is fit for handling loaves of bread.

This aim is reached in that: the device has been adapted to remove loaves of bread from baking tins; the pins are adapted to enter the loaves of bread on their short sides; and that the device comprises on each side at least two pins for each loaf of bread which are adapted to enter the two mutually opposite short sides of the loaf of bread above the upper pins of the baking tins.

Further apparatusses are known, which operate with suction cups which engage the loaves on the top side.

This often results in inadequate engagement of the loaves, so that as the engaging devices move upward the engagement is released and the loaf remains behind in the baking tin. These suction cups also wear exceptionally quickly and the vacuum equipment causes much noise nuisance and the equipment requires a relatively large amount of electric power.

According to the invention the device comprises on each side at least two pins for each loaf which are adapted to enter the two mutually opposite short sides of the loaf.

This measure results in a good coupling between the loaves and the pins so that the case of the loaf becoming detached, for instance by a part thereof being torn off, is avoided, while the loaves are also held firmly so that tilting around a horizontal axis is prevented. In other words, the position of the loaf is well defined.

A structurally attractive embodiment results when the device comprises on each side at least two pins for each loaf which are drivable by a common linear element. This provides a substantial saving on the number of linear drive elements. These are generally quite costly components.

According to another embodiment the frame is adapted to pick up a large number of loaves simultaneously.

This is of particular importance in industrial-scale bakeries. Large quantities of loaves herein leave the oven successively, so that a large number of loaves must be removed from the baking tins in a short time. It will be apparent that if this takes place simultaneously with large numbers, the capacity can be increased.

According to a final preferred embodiment, the device is adapted to pick up a series of loaves supplied mutually adjacently in baking tins on a first conveyor belt and to place the loaves onto a second conveyor belt. The second conveyor belt generally leads to a cooling device where the loaves are cooled and can subsequently be sliced and/or packed.

It is herein possible for the outfeed conveyor belt to be placed parallel to the feed conveyor belt, although it is equally possible for the outfeed conveyor belt to be placed in a different spatial relationship relative to the feed conveyor belt. This depends on the situation in question, wherein the movement of the frame must of course be modified thereto.

The present invention will be elucidated hereinbelow with reference to the annexed drawings, in which:
figure 1 shows a partly broken-away perspective view of a device according to the present invention; and
figure 2 is a cross-sectional view along the line II-II of the device shown in figure 1.

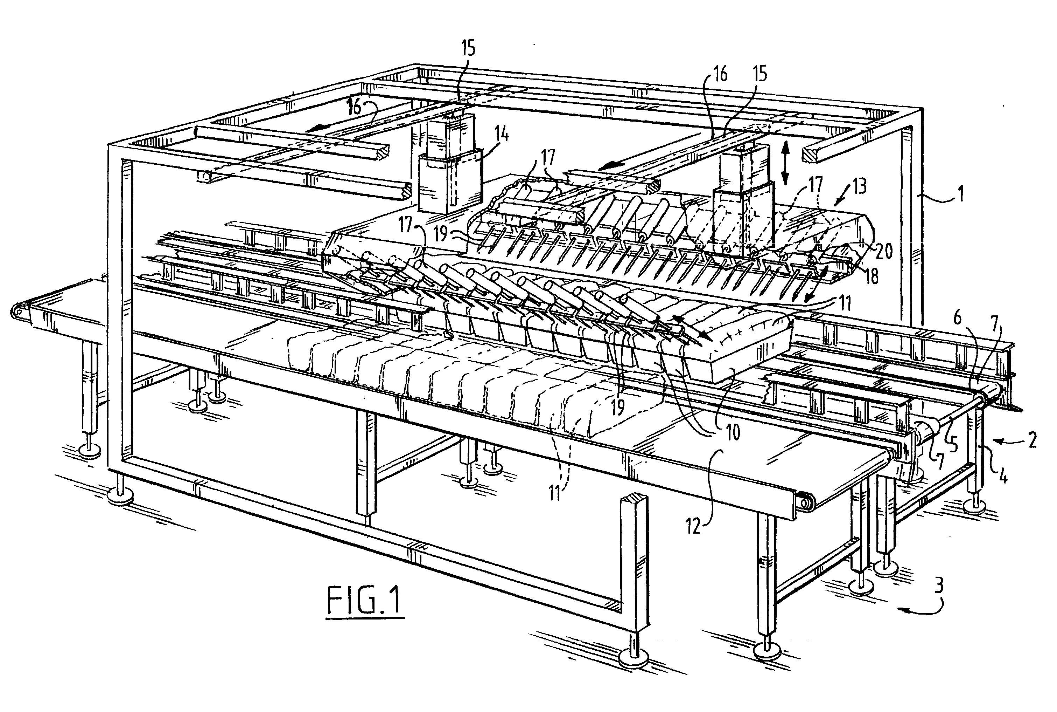

The device depicted in figure 1 comprises a substantially tunnel-like frame 1 placed over two conveyor belts 2 and 3. Feed conveyor belt 2 is adapted to feed baked loaves in baking tins from for instance an oven. Outfeed conveyor belt 3 is adapted to supply the loaves taken out of the baking tins to for instance a cooling device.

The feed conveyor belt is formed by a sub-frame 4 in which is mounted a number of shafts 5, on each of which two rollers 6 are arranged. A belt 7 is trained round each of the rollers 6. By driving at least one of the shafts 5, for instance by means of an electric motor 8 with an associated gearbox 9, both belts 7 are driven in a linear movement. The two belts are used in respect of an easy feed of the baking tins 10 in which the loaves 11 are baked. Extending parallel to said feed conveyor belt 2 is an outfeed conveyor belt 3 constructed in similar manner but provided with only a single belt 12.

A movable frame 13 is mounted on frame 1. Movable frame 13 is connected to an elongate carrier 15 by means of linear moving elements 14, for instance in the form of a hydraulic cylinder 14. Carrier 15 is received in a frame rod 16 and is movable in axial direction relative to this frame rod 16, for instance by means of a per se known linear drive element (not shown in the drawing).

Also arranged is a second linear drive element 14 which is again mounted on a carrier 15 which is movable reciprocally in a frame rod 16. As a result of these measures, the movable frame can move in horizontal direction transversely of the direction of the conveyor belts as well as in vertical direction.

It is otherwise possible with the relevant structural modifications to cause the movable frame for instance to rotate relative to main frame 1 or to move linearly in a third direction. Provisions would have to be made for this purpose in for instance the parts of the frame extending parallel to the conveyor belts.

Such components generally form part of the prior art so that it is not necessary to discuss these further.

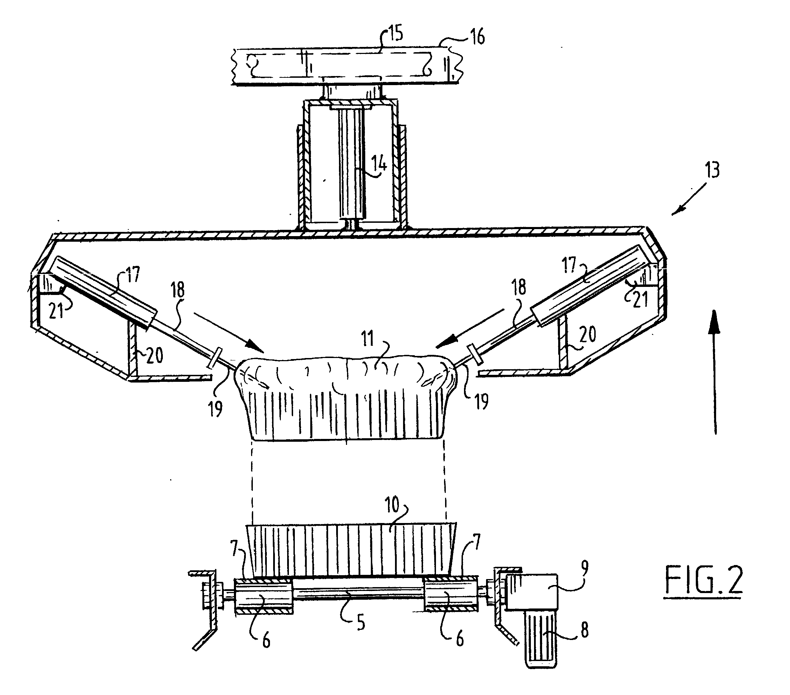

As shown particularly well in figure 2, a number of linear drive elements 17 are arranged in movable frame 13, which has the form of a bent plate, which elements can for instance be formed by hydraulic, pneumatic or electrical linear drive elements.

On the movable piston 18 of each of these elements are arranged two pins 19 which are adapted to be able to move into the loaves 11. Linear drive element 17 is otherwise fixed by means of brackets 20 respectively 21 to movable frame 13. Auxiliary equipment is of course further present to control the diverse linear drive elements and for communication with the control devices of conveyor belts 2 and 3. It will otherwise be apparent that the entire control for all components can be accommodated in the same control device.

The operation of the present device will now be elucidated.

The loaves baked in baking tins 10 are fed on the conveyor belts 7. The feed movement is herein continued until a number of loaves, in the present case 12, have arrived at the position of sub-frame 13. This latter is placed such that when each of the linear drive elements 17 is actuated the relevant pins 19 enter the loaves 11 obliquely on their end sides. As soon as the loaves have taken up this relevant position, they are thus entered by the pins 19, whereafter the loaves are moved upward to a position above baking tins 10 by operating linear drive elements 14.

Depending on the speed of the processes in question, it may be necessary to bring the feed conveyor belt 2 to a standstill prior to entry of the pins 19. It is likewise possible to allow the conveyor belt 2 to keep moving and to bring the tins to a standstill relative to pins 9 by blocking the tins or clamping them using a stop element.

The loaves thus attached to sub-frame 13 above baking tins 10 are placed in a position above outfeed conveyor belt 12 with the movement of sub-frame 13 caused by the linear devices (not shown) for moving carriers 15.

The sub-frame is then moved downward again and the pins 19 retracted. Loaves 11 thus lie on conveyor belt 12, as shown in figure 1 with dashed lines. Sub-frame 13 is then moved back to its starting position for engaging a subsequent series of loaves. The series of loaves placed on belt 12 is then discharged to a cooling device. The emptied baking tins 10 are fed by means of feed conveyor belt 2 to a device in which the baking tins are once again made ready for filling with dough, such as a cleaning device and a device for greasing the baking tin. It is also possible to place outfeed conveyor belt 12 and feed conveyor belt 3 in a different spatial relationship relative to the removing device according to the present invention.

Diverse modifications can of course made to the drawn configuration without departing from the present invention.

## Claims

1. Device for removing baking products (11) from baking tins (10), comprising engaging means (19) mounted on a frame (20) for engaging the baking products (11) wherein the frame (20) is adapted to move at least vertically with the engaging means (19) to remove the baking products (11) from the baking tins (10), wherein the engaging means comprise pins (19) movable into the in a direction with a horizontal component **characterized in that** the device has been adapted to remove loaves of bread (11) from baking tins (11); the pins (19) are adapted to enter the loaves of bread (11) on their short sides; and that the device comprises on each side at least two pins (19) for each loaf of bread (11) which are adapted to enter the two mutually opposite short sides of the loaf of bread (11) above the upper pins of the baking tins (10).

2. Device as claimed in claim 1 **characterized in that** the device comprises on each side at least two pins (19) for each loaf (11) which are drivable by a common linear drive element (17, 18).

3. Device as claimed in any of the foregoing claims, **characterized in that** the frame (20) is adapted to pick up a large number of loaves simultaneously.

4. Device as claimed in claim 3, **characterized in that** the device is adapted to pick up a series of loaves (11) supplied mutually adjacently in baking tins (10) on a first conveyor belt (7) and to place the loaves on a second conveyor belt.

## Patentansprüche

1. Vorrichtung zum Entnehmen von Backprodukten (11) aus Backformen (10), umfassend auf einem Rahmen (20) montierte Zugriffsmittel (19) zum Aufnehmen der Backprodukte (11), wobei der Rahmen (20) dafür ausgelegt ist, sich zumindest vertikal mit den Zugriffsmitteln (19) zu bewegen, um die Backprodukte (11) aus den Backformen (10) zu entfernen, wobei die Zugriffsmittel Stifte (19) umfassen, die in eine Richtung mit einer horizontalen Komponente beweglich sind, **dadurch gekennzeichnet, dass** die Vorrichtung dafür eingerichtet ist, Brotlaibe (11) aus Backformen (10) zu entfernen; die Stifte (19) dafür eingerichtet sind, in die Brotlaibe (11) auf deren kurzen Seiten einzudringen; und dass die Vorrichtung auf jeder Seite zumindest zwei Stifte (19) für jeden Brotlaib (11) umfasst, die dafür eingerichtet sind, in die zwei zueinander gegenüberliegenden kurzen Seiten des Brotlaibs (11) über den oberen Stiften der Backformen (10) einzudringen.

2. Vorrichtung gemäß Anspruch 1, **dadurch gekennzeichnet, dass** die Vorrichtung auf jeder Seite zumindest zwei Stifte (19) für jeden Laib (11) umfasst, die durch ein gemeinsames lineares Antriebselement (17, 18) antreibbar sind.

3. Vorrichtung gemäß einem der vorstehenden Ansprüche, **dadurch gekennzeichnet, dass** der Rahmen (20) dafür ausgelegt ist, eine große Anzahl von Laiben gleichzeitig aufzunehmen.

4. Vorrichtung gemäß Anspruch 3, **dadurch gekennzeichnet, dass** die Vorrichtung dafür eingerichtet ist, eine Reihe von Laiben (11) aufzunehmen, die auf einem ersten Förderband (7) zueinander angrenzend in Backformen zugeführt werden und die Laibe auf einem zweiten Förderband zu platzieren.

## Revendications

1. Dispositif servant à extraire des produits de boulangerie (11) hors de moules de cuisson (10) et comportant des moyens de prise (19) qui sont montés sur un châssis (20) et servent à prendre les produits de boulangerie (11), dans lequel le châssis (20) est conçu pour se déplacer au moins verticalement avec les moyens de prise (19) en vue d'extraire les produits de boulangerie (11) hors des moules de cuisson (10), dans lequel les moyens de prise comportent des broches (19) pouvant être introduites dans les produits de boulangerie (11) dans une direction comportant une composante horizontale, **caractérisé en ce que** le dispositif a été conçu pour extraire des pains (11) hors de moules de cuisson (10) ; **en ce que** les broches (19) sont conçues pour entrer à l'intérieur des pains (11) par les petits côtés de ces derniers ; et **en ce que** le dispositif comporte, de chaque côté, au moins deux broches (19) par pain (11), lesquelles sont conçues pour entrer dans les deux petits côtés mutuellement opposés du pain (11) au-dessus des bords supérieurs des moules de cuisson (10).

2. Dispositif selon la revendication 1, **caractérisé en ce que** le dispositif comporte, de chaque côté, au moins deux broches (19) par pain (11), lesquelles peuvent être entraînées par un élément de commande linéaire (17, 18) commun.

3. Dispositif selon l'une quelconque des revendications précédentes, **caractérisé en ce que** le châssis (20) est conçu pour prendre simultanément un grand nombre de pains.

4. Dispositif selon la revendication 3, **caractérisé en ce que** le dispositif est conçu pour prendre une série de pains (11) apportés les uns à côté des autres dans des moules de cuisson (10) sur une première bande transporteuse (7) et pour placer lesdits pains sur une deuxième bande transporteuse.
